# EUROPEAN PATENT APPLICATION

(11) **EP 2 233 349 A1**
(43) Date of publication of application: **29.09.2010**
(21) Application number: 09425122.0
(22) Date of filing: 27.03.2009
(51) Int. Cl.: B60N 2/48, B60R 7/04

(54) **Essence dispenser integrated in the headrest of a motor-vehicle seat**

(71) Applicant: Fiat Group Automobiles S.p.A., 10135 Torino (TO) (IT)
(72) Inventor: Chionetti, Serena, 10135 Torino (IT); Castellino, Valeria, 10135 Torino (IT)
(74) Representative: Notaro, Giancarlo

(57) **Abstract**

A headrest for a motor-vehicle seat has a rigid rear wall (2) provided with a receptacle (5) for a perfuming element (8).

## Description

The present invention relates to a headrest for motor-vehicle seats.

In order to associate to the headrest an additional functionality, bestowing thereon at the same time characteristics of particular originality also as regards design, the subject of the present invention is a headrest of the type specified above having a receptacle for receiving in a removable way an essence dispenser or perfuming element.

In the preferred embodiment, the aforesaid receptacle is integrated or incorporated in a rear wall of the headrest and is provided with a slit-like access opening for the aforesaid perfuming element, which preferably has a plate-like conformation, with any desired profile, for example a profile shaped like an elongated biscuit.

Once again in the case of the preferred embodiment, the receptacle is defined by a structure made of plastic material mounted on the rear wall of the headrest and having a portion of perforated or grill-like wall that delimits, on the outer side, the aforesaid receptacle and defines, with its top edge, the outer side of the slit-like access opening.

The perfuming element is preferably sized and/or shaped to project partially from the aforesaid slit-like opening when it is completely received in the receptacle so as to enable it to be gripped.

Further characteristics and advantages of the invention will emerge from the ensuing description with reference to the annexed drawings, which are provided purely by way of non-limiting example and in which:
Figure 1 is a rear view of a first embodiment of the headrest according to the invention in the condition where it is mounted on a motor-vehicle seat;
Figure 2 illustrates the headrest of Figure 1, with a perfuming element inserted in the respective receptacle;
Figure 3 is a front view of a perfuming element shaped for being received in the receptacle of the headrest illustrated in Figures 1 and 2;
Figure 4 is a variant of Figure 2, where the headrest is substantially circular in shape and where also the receptacle is substantially circular;
Figures 5-7 represent variants in relation to the conformation of the outer wall of the receptacle; and
Figure 8 is a cross-sectional view of the headrest of Figure 4.

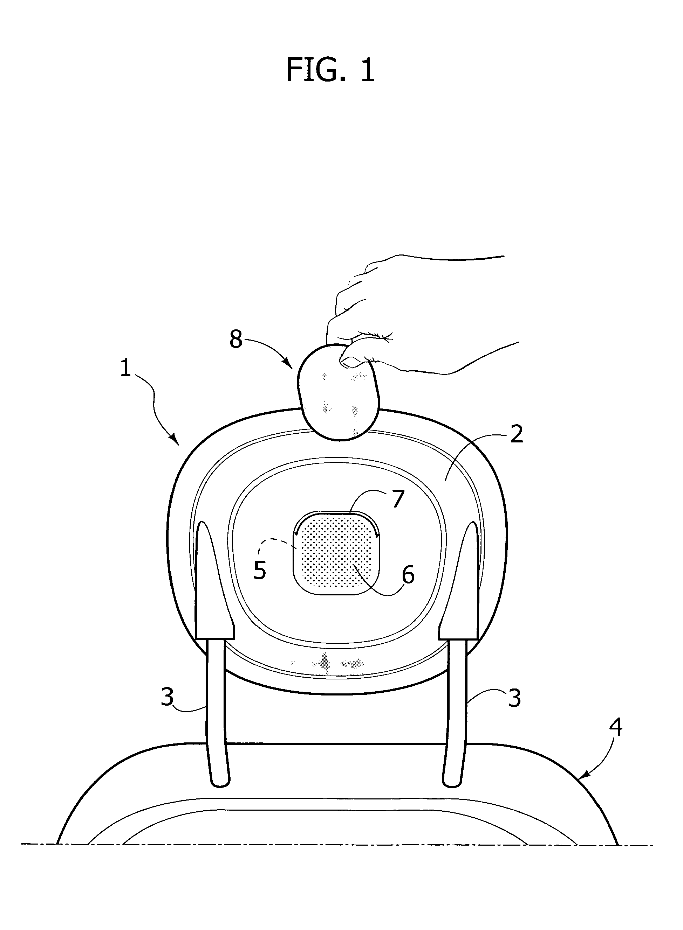

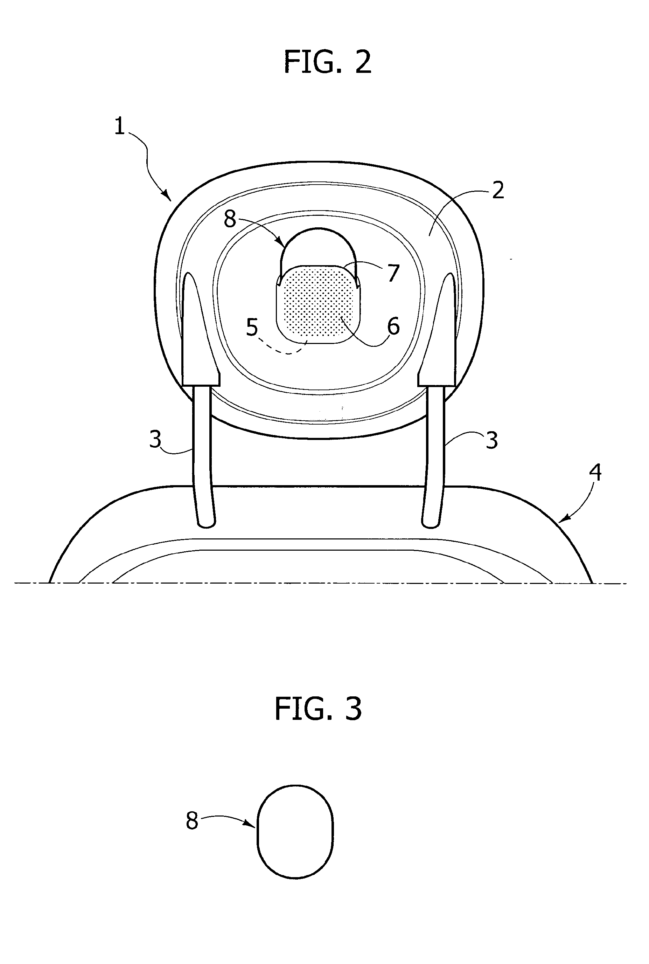

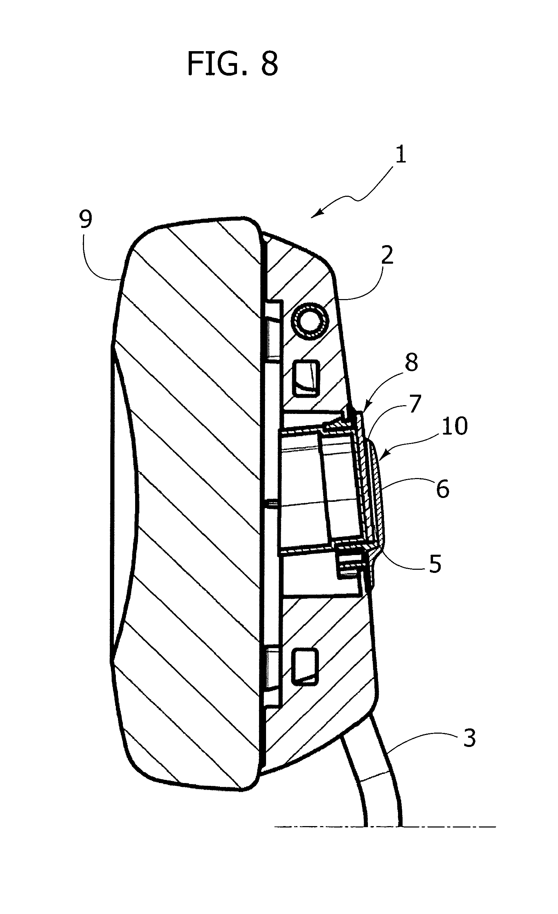

With reference to Figures 1 and 2, designated as a whole by 1 is a motor-vehicle headrest having a rigid structure defining a rear wall 2. Anchored to said rigid structure is a padding, with the corresponding upholstery, which is designated by 9 in Figure 8. According to the conventional technique, the structure of the headrest is carried by a pair of supporting rods 3, which are in turn received in a vertically adjustable way on the frame (not visible in the drawings) of a backrest 4 of a motor-vehicle seat, the top part of which is visible in Figures 1 and 2.

Of course, the invention applies whatever the conformation and structure of the headrest, the backrest of the seat, and the corresponding coupling means.

According to the invention, the headrest 1 is provided with a receptacle 5, which, in the embodiments illustrated, is defined by a structure made of plastic material 10 (visible in Figure 8), which is mounted by snap action in a seat made in the rear wall 2 of the headrest. The receptacle 5 is delimited on the outer side by a portion of perforated plane wall 6, which delimits with its rear edge the outer side of a slit-like opening 7 for access to the receptacle 5.

It is possible to insert in a removable way, through the slit-like opening 7, into the receptacle 5 a perfuming element 8 shaped like a plate of uniform thickness. The perfuming element can have any desired profile. The drawings illustrate a preferred solution, in which it has a profile shaped like an elongated biscuit, with two rectilinear parallel sides and semicircular ends. Figure 2 shows that the perfuming element 8 is sized in such a way that it projects from the slit 7 when it is inserted completely within the receptacle 5 to enable it to be gripped.

The material forming the perfuming element 8 can be any suitable material (paper, polymeric, or composite material) similar to the ones commonly used for the perfuming elements for use in the passenger compartment of motor vehicles.

Of course, it is possible to envisage a range of perfuming elements (for example, perfumed, and/or odour-absorbant, and/or anti-bacterial elements), corresponding to which, for example, are different colourings of the perfuming element.

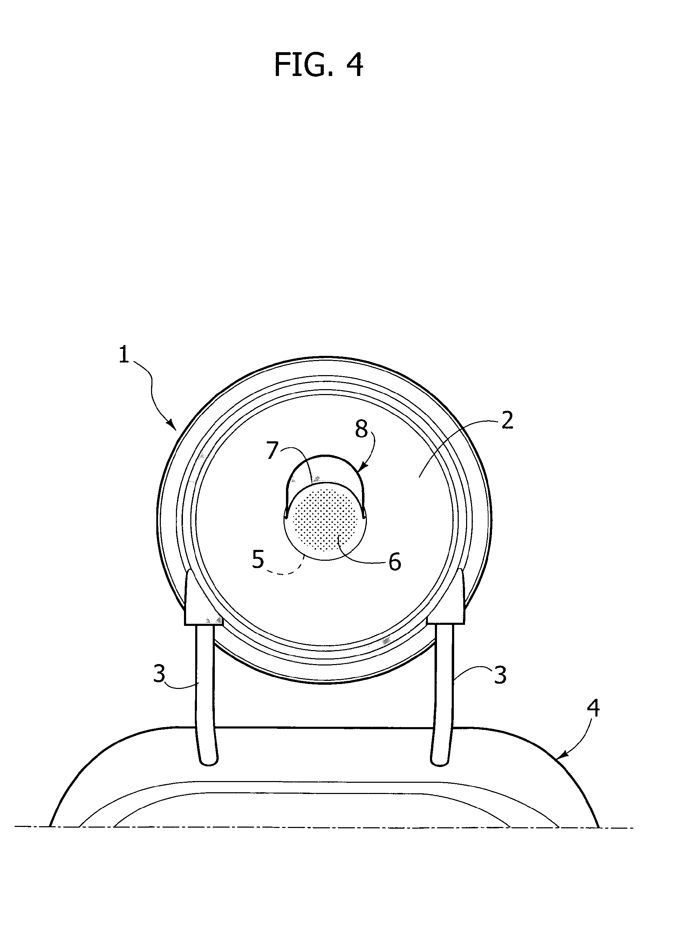

Figure 4 differs from Figure 2 only as regards a different conformation of the headrest and of the receptacle 5 whilst the biscuit-like element 8 remains unvaried in shape.

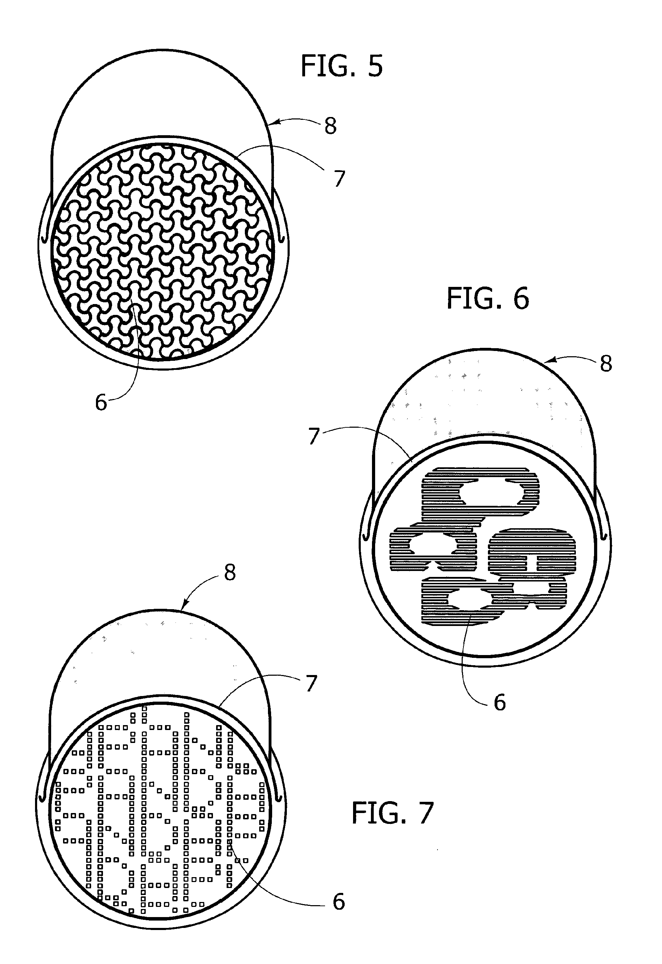

Preferably, moreover, the perforations made in the wall 6 are designed according to an aesthetic and/or graphic pattern of any desired sort, as may be seen in Figures 6 and 7, or else the wall 6 can be made according to a grill of any shape, for example as illustrated in Figure 5.

Of course, without prejudice to the principle of the invention, the details of construction and the embodiments may vary widely with respect to what has been described and illustrated herein purely by way of example, without thereby departing from the scope of the present invention.

## Claims

1. A headrest for a motor-vehicle seat, having a receptacle (5) for receiving, in a removable way, a perfuming element (8).

2. The headrest according to Claim 1,
**characterized in that** said receptacle (5) is integrated or incorporated in a rear wall (2) of the headrest.

3. The headrest according to Claim 1,
**characterized in that** said receptacle (5) is defined by a structure (10) mounted in a seat in the aforesaid rear wall (2) of the headrest.

4. The headrest according to Claim 1,
**characterized in that** said perfuming element (8) is shaped like a plate and **in that** said receptacle (5) has a slit-like access opening (7) for introduction of the perfuming element (8).

5. The headrest according to Claim 4,
**characterized in that** said receptacle (5) is delimited on the outer side by a portion of perforated or grill-like wall (6), the top edge of which defines the outer side of said slit-like access opening (7).

6. The headrest according to Claim 1,
**characterized in that** said perfuming element (8) is sized for projecting from the receptacle (5) when it is received completely within it, to enable it to be gripped.

7. The headrest according to Claim 1,
**characterized in that** said perfuming element (8) is shaped like an elongated biscuit, with two parallel rectilinear sides and two semicircular ends.

8. The headrest according to Claim 1,
**characterized in that** the perfuming element is provided with characteristics of perfuming, and/or odour-absorbant, and/or anti-bacterial agent.
